# EUROPEAN PATENT APPLICATION

(11) **EP 4 170 068 A1**
(43) Date of publication of application: **26.04.2023**
(21) Application number: 22194827.6
(22) Date of filing: 09.09.2022
(51) Int. Cl.: C25B 1/04, C25B 9/19, C25B 15/02, C25B 15/025, C25B 15/033, C25B 15/08

(54) **WATER ELECTROLYZER AND CONTROL METHOD OF WATER ELECTROLYSIS CELL**

(30) Priority: 13.10.2021 JP 2021168247
(71) Applicant: KABUSHIKI KAISHA TOSHIBA, Minato-ku Tokyo 105-0023 (JP); Toshiba Energy Systems & Solutions Corporation, Saiwai-ku Kawasaki-shi Kanagawa 2120013 (JP)
(72) Inventor: MATSUNAGA, Atsushi, Kawasaki-shi, Kanagawa, 212-0013 (JP); NAKAMORI, Yoji, Kawasaki-shi, Kanagawa, 212-0013 (JP); YOSHINAGA, Norihiro, Tokyo, 105-0023 (JP); MURAYAMA, Hirotoshi, Tokyo, 105-0023 (JP); HIDAI, Shoichi, Kawasaki-shi, Kanagawa, 212-0013 (JP); SHIMOTORI, Soichiro, Kawasaki-shi, Kanagawa, 212-0013 (JP)
(74) Representative: Hoffmann Eitle

(57) **Abstract**

According to an embodiment, a water electrolysis cell (20) generates hydrogen and oxygen by electrolyzing water supplied to an anode electrode (102) using a solid polymer electrolyte membrane (101) having the anode electrode (102) installed on one side and a cathode electrode (104) installed on the other side. The power source supplies a current and a voltage provided by a direct-current power source (30a) to between terminals of the water electrolysis cell (20). The controller (40) performs a first mode of control that, after stopping hydrogen generation, establishes a connection state that causes a discharge current in the opposite direction from a current direction inside the water electrolysis cell (20) during hydrogen generation, and controls a potential of the anode electrode (102) to a first potential while keeping a potential decrease speed at the anode electrode (102) during generation of the discharge current at a predetermined value.

## Description

### FIELD

Embodiments of the present invention relate to a water electrolyzer and a control method of a water electrolysis cell.

### BACKGROUND

A water electrolyzer is a device that generates hydrogen and oxygen. During operation, a direct current is applied to a water electrolysis cell included in the water electrolyzer from outside and thus water is electrolized to generate hydrogen from a cathode electrode and oxygen from an anode electrode. Examples of water electrolysis cells include a solid-polymer water electrolysis cell (PEM water electrolysis cell) that uses a solid polymer electrolyte membrane as a diaphragm, an alkaline water electrolysis cell that has a diaphragm provided in an alkaline electrolytic solution, and a solid-oxide water electrolysis cell that uses a solid oxide as an electrolyte. Among them, a solid-polymer water electrolysis cell has a low operating temperature and can generate hydrogen of high purity.

In this solid-polymer water electrolysis cell, when impurities, such as metal ions, get mixed in circulation water to be supplied into the cell, the impurities may adhere to an inside of the cell electrodes and cause performance degradation. It has been found that impurities can be discharged when operation is stopped and a reverse current flows as an oxygen gas remaining at the anode electrode and a hydrogen gas at the cathode electrode react to generate a back electromotive force. However, rapid voltage fluctuations and voltage decrease involved in this discharge may cause the metal catalyst of the anode electrode to elute, which would lead to deterioration of the water electrolysis cell.

### BRIEF DESCRIPTION OF THE DRAWINGS

FIG. 1 is a block diagram showing the configuration of a water electrolyzer;
FIG. 2 is a view showing an example of the configuration of a single cell constituting a part of a water electrolysis cell;
FIG. 3A is a block diagram showing an example of the configuration of a power source;
FIG. 3B is a block diagram showing another example of the configuration of the power source;
FIG. 4 is a block diagram showing an example of the configuration of a controller;
FIG. 5 is a view schematically showing reactions at an anode electrode and a cathode electrode;
FIG. 6 is a view schematically showing reactions at the anode electrode and the cathode electrode with impurities mixed in;
FIG. 7 is a view schematically showing reactions at the anode electrode and the cathode electrode during a recovery operation;
FIG. 8 is a graph showing the thermodynamic stability of iridium oxide;
FIG. 9 is graphs showing a state of the water electrolysis cell in a comparative example;
FIG. 10 is a graph showing a potential during stoppage in a first mode;
FIG. 11 is graphs showing a state of the water electrolysis cell in the first mode;
FIG. 12 is a graph showing a potential during stoppage in a second mode;
FIG. 13 is graphs showing a state of the water electrolysis cell in the second mode;
FIG. 14 is a flowchart showing an example of control over the water electrolysis cell;
FIG. 15 is a flowchart showing an example of control during stoppage of hydrogen generation;
FIG. 16 is a block diagram showing the configuration of a water electrolyzer according to a second embodiment; and
FIG. 17 is a block diagram showing the configuration of a controller according to the second embodiment.

### DETAILED DESCRIPTION

According to an embodiment, a water electrolyzer includes a water electrolysis cell, a power source, and a controller. The water electrolysis cell generates hydrogen and oxygen by electrolyzing water supplied to an anode electrode using a solid polymer electrolyte membrane having the anode electrode installed on one side and a cathode electrode installed on the other side. The power source supplies a current and a voltage provided by a direct-current power source to between terminals of the water electrolysis cell. The controller performs a first mode of control that, after stopping hydrogen generation, establishes a connection state that causes a discharge current in the opposite direction from a current direction inside the water electrolysis cell during hydrogen generation, and controls a potential of the anode electrode to a first potential while keeping a potential decrease speed at the anode electrode during generation of the discharge current at a predetermined value.

A water electrolyzer and a control method of a water electrolysis cell according to embodiments of the present invention will be described in detail below with reference to the drawings. The embodiments shown below are examples of embodiments of the present invention, and the present invention should not be construed as being limited to these embodiments. In the drawings to be referred to in the embodiments, parts that are the same or have similar functions may be denoted by the same reference sign or similar reference signs to omit repeated description thereof. For the convenience of description, the dimensional proportions in the drawings may differ from actual proportions or some of components may be omitted from the drawings.

### (First Embodiment)

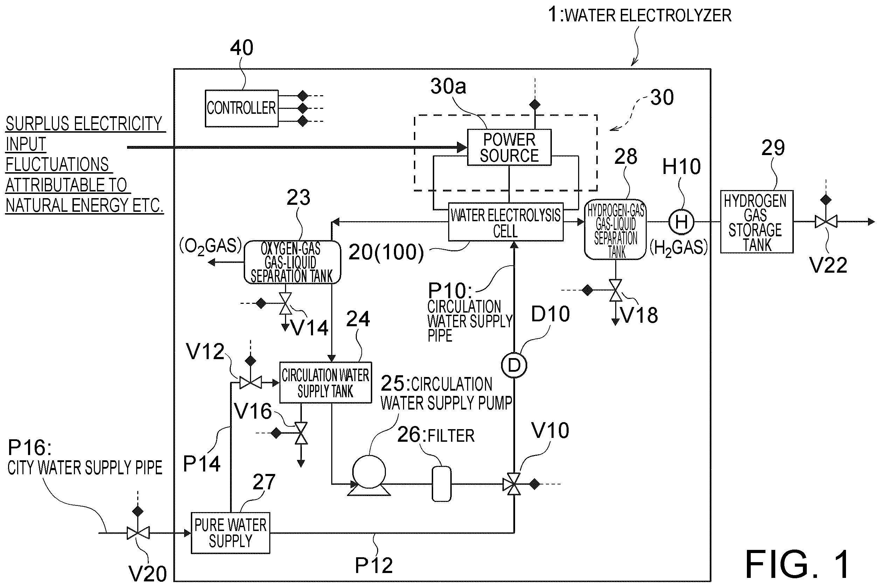

FIG. 1 is a block diagram showing the configuration of a water electrolyzer 1. As shown in FIG. 1, the water electrolyzer 1 according to this embodiment is one example of water electrolyzers that generate hydrogen and oxygen using a solid polymer electrolyte membrane. The water electrolyzer 1 includes a water electrolysis cell 20, an oxygen-gas gas-liquid separation tank 23, a circulation water supply tank 24, a circulation water supply pump 25, a filter 26, a pure water supply 27, a hydrogen-gas gas-liquid separation tank 28, a power source 30, a controller 40, a plurality of control valves V10, V12, V14, V16, V18, V20, supply pipes P10, P12, P14, P16, an electrical conductivity meter D10, and a hydrogen meter H10. FIG. 1 further shows a hydrogen gas storage tank 29, a city water supply pipe P16, and control valves V20, V22. The water electrolyzer 1 may be referred to as a water electrolysis unit.

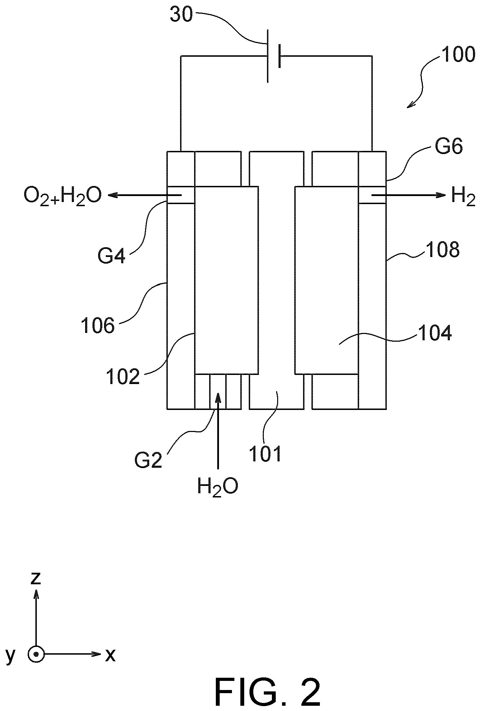

FIG. 2 is a view showing an example of the configuration of a single cell 100 constituting a part of the water electrolysis cell 20. As shown in FIG. 2, the single cell 100 has a solid polymer electrolyte membrane (PEM) 101, an anode electrode 102, a cathode electrode 104, an anode current collector 106, and a cathode current collector 18. In the single cell 100, the solid polymer electrolyte membrane 101 is sandwiched between the anode electrode 102 and the cathode electrode 104, and the anode current collector 106 and the cathode current collector 108 are disposed on further outer sides. The water electrolysis cell 20 is formed by stacking a plurality of single cells 100. While the water electrolysis cell 20 according to this embodiment is formed by stacking a plurality of single cells 100 in series, the water electrolysis cell 20 is not limited thereto. For example, the water electrolysis cell 20 may be formed by one single cell 100. Alternatively, the water electrolysis cell 20 may be formed by connecting a plurality of single cells 100 in parallel to one another.

The solid polymer electrolyte membrane 101 includes, as a component, fluorine-based polymer having a sulfonic acid group, for example. The anode electrode 102 is formed by an electrode in which, for example, a catalyst layer including an iridium oxide catalyst (IrOₓ) is sandwiched between the solid polymer electrolyte membrane 101 and a titanium non-woven fabric. The cathode electrode 104 is formed by an electrode in which, for example, a mixture of a platinum-supported carbon catalyst or a platinum alloy-supported carbon catalyst and an ionomer is applied to a carbon paper, a carbon cloth, a carbon non-woven fabric, or a titanium non-woven fabric.

The anode current collector 106 is connected to a positive electrode of the power source 30, and the cathode current collector 108 is connected to a negative electrode of the power source 30. Thus, hydrogen ions move inside the solid polymer electrolyte membrane 101, and water H₂O supplied from a supply port G2 is electrolyzed. Meanwhile, at the anode electrode 102, a reaction 2H₂O → 4H⁺ + 4e⁻ + O₂ occurs, and oxygen O₂ and unreacted water H₂O are discharged from a discharge port G4.

On the other hand, at the cathode electrode 104, a reaction 4H⁺ + 4e⁻ → 2H₂ occurs, and hydrogen H₂ is discharged from a discharge port G6. Thus, inside the single cell 100, a reaction 2H₂O → 2H₂ + O₂ occurs.

Opening and closing of the plurality of control valves V10, V12, V14, V16, V18, V20, V20, V22 are controlled by the controller 40. The circulation water supply pipe P10 connects the water electrolysis cell 20, the oxygen-gas gas-liquid separation tank 23, the circulation water supply tank 24, the circulation water supply pump 25, the filter 26, and the electrical conductivity meter D10 to one another. The oxygen-gas gas-liquid separation tank 23 recovers oxygen-containing water discharged from the discharge port G4 of each single cell 100 in the water electrolysis cell 20 and separates oxygen and water from each other.

The circulation water supply tank 24 stores the water separated by the oxygen-gas gas-liquid separation tank 23 and pure water replenished from the pure water supply 27. The circulation water supply pump 25 supplies oxygen-containing water discharged from the discharge port G4 of each single cell 100 to the oxygen-gas gas-liquid separation tank 23. The circulation water supply pump 25 supplies the water in the circulation water supply tank 24 to the supply port G2 of each single cell 100 through the filter 26. The filter 26 filters out impurities in the circulation water.

The electrical conductivity meter D10 measures the electrical conductivity of the circulation water. The hydrogen meter H10 measures the amount of hydrogen in the discharge pipe P16.

The pure water supply 27 generates pure water from water supplied through the city water supply pipe P16 and supplies the generated pure water. During normal operation, the pure water supply 27 replenishes pure water to the circulation water supply tank 24 through the first pure water replenishing pipe P14. On the other hand, during a process of removing impurities in the water electrolysis cell 20, the pure water supply 27 supplies pure water to each single cell 100 through the second pure water replenishing pipe P12. The pure water supplied by the pure water supply 27 is water with the electrical conductivity adjusted to or below a predetermined electrical conductivity, and is, for example, ion-exchanged water or purified water from which impurities have been removed by a method other than ion exchange. For example, the electrical conductivity of ion-exchanged water is 1 µS/cm or lower, desirably 0.06 µS/cm or lower (18 MΩ·cm or higher as converted into an electrical resistance).

The discharge pipe P16 connects the hydrogen-gas gas-liquid separation tank 28 and the discharge port G6 of each single cell 100 to each other. Thus, a hydrogen gas discharged from the discharge port G6 of each single cell 100 and water having been condensed by moving inside the solid polymer electrolyte membrane 101 along with the hydrogen ions are supplied to the hydrogen-gas gas-liquid separation tank 28.

The hydrogen-gas gas-liquid separation tank 28 separates a hydrogen gas and water from each other. The hydrogen-gas gas-liquid separation tank 28 is further connected to the hydrogen gas storage tank 29. Thus, the separated hydrogen is stored in the hydrogen gas storage tank 29 and distributed therefrom.

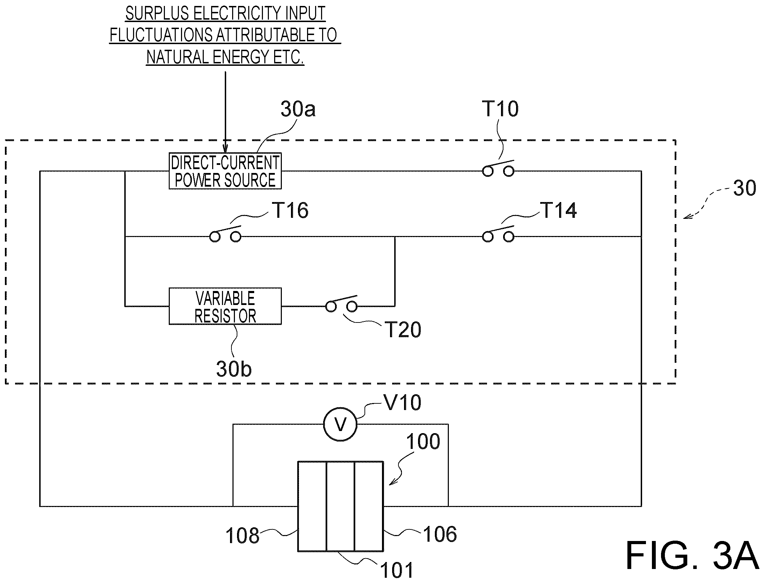

FIG. 3A is a block diagram showing an example of the configuration of the power source 30. As shown in FIG. 3A, the power source 30 has a direct-current power source 30a of which supply current and voltage can be controlled, a variable resistor 30b, a plurality of switches T10, T14, T16, T20, and a voltmeter V10. The plurality of switches T10, T14, T16, T20 are switches that electrically connect or disconnect. Electrical connection states according to this embodiment correspond to connection states of the plurality of switches T10, T14, T16, T20.

A positive electrode of the direct-current power source 30a is connected to one end of the switch T10, and the other end of the switch T10 is connected to the anode current collector 106. Thus, when the switch T10 is put in a connected state, the positive electrode of the direct-current power source 30a is connected to the anode current collector 106 through the switch T10 and a negative electrode thereof is connected to the cathode current collector 108. One end of the switch T14 is connected to the other end of the switch T10, and the other end thereof is connected to one end of the switch T16. The other end of the switch T16 is connected to the negative electrode of the direct-current power source 30a. The anode current collector 106 and the cathode current collector 108 according to this embodiment correspond to terminals. One end of the variable resistor 30b is connected to the cathode current collector 108 and the other end thereof is connected to one end of the switch T20. The other end of the switch T20 is connected to the other end of the switch T14.

The variable resistor 30b is connected to the anode current collector 106 and the cathode current collector 108 when the switches T10, T16 are put in a disconnected state and the switches T14, T20 are put in a connected state. Thus, the variable resistor 30b allows a resistance between the anode current collector 106 and the cathode current collector 108 to vary when the switches T10, T16 are put in a disconnected state and the switches T14, T20 are put in a connected state.

On the other hand, when the switch T10 is put in a disconnected state as described above, the direct-current power source 30a can be put in a disconnected state. The connected and disconnected states of the plurality of switches T10, T14, T16, T20 are controlled by the controller 40.

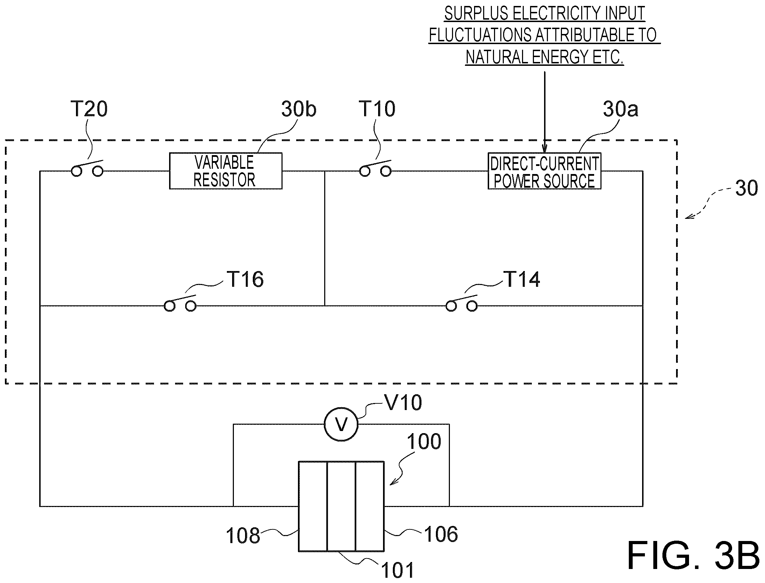

FIG. 3B is a block diagram showing another example of the configuration of the power source 30. As shown in FIG. 3B, the power source 30 has a direct-current power source 30a of which supply current and voltage can be controlled, a variable resistor 30b, a plurality of switches T10, T14, T16, T20, and a voltmeter V10. A positive electrode of the direct-current power source 30a is connected to the anode current collector 106, and a negative electrode thereof is connected to one end of the switch T10. The other end of the switch T10 is connected to one end of the variable resistor 30b and one end of the switch T16. The other end of the switch T16 is connected to the cathode current collector 108. Thus, when the switches T10, T16 are put in a connected state, the positive electrode of the direct-current power source 30a is connected to the anode current collector 106, and the negative electrode thereof is connected to the cathode current collector 108 through the switches T10, T16.

The other end of the variable resistor 30b is connected to one end of the switch T20. The other end of the switch T20 is connected to the cathode current collector 108. The variable resistor 30b is connected to the anode current collector 106 and the cathode current collector 108 when the switches T10, T16 are put in a disconnected state and the switches T14, T20 are put in a connected state. Thus, the variable resistor 30b allows a resistance between the anode current collector 106 and the cathode current collector 108 to vary when the switches T10, T16 are put in a disconnected state and the switches T14, T20 are put in a connected state.

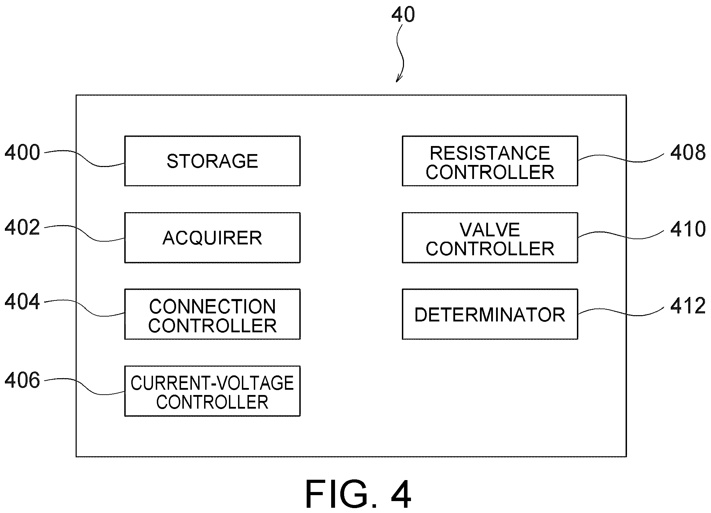

FIG. 4 is a block diagram showing an example of the configuration of the controller 40. As shown in FIG. 4, the controller 40 controls the entire water electrolyzer 1, and has, for example, a storage 400, an acquirer 402, a connection controller 404, a current-voltage controller 406, a resistance controller 408, a valve controller 410, and a determinator 412. The controller 40 includes, in its configuration, for example, a central processing unit (CPU) and a microprocessor (MPU), and realizes the aforementioned processors by executing control programs stored in the storage 400. Each processor may be realized by an electronic circuit.

The specific configuration of the controller 40 is not particularly limited, and, for example, a field programable gate array (FPGA) or other devices, such as an application specific integrated circuit (ASIC) may be used. Alternatively, the controller 40 may be formed by a general-purpose computer or the like.

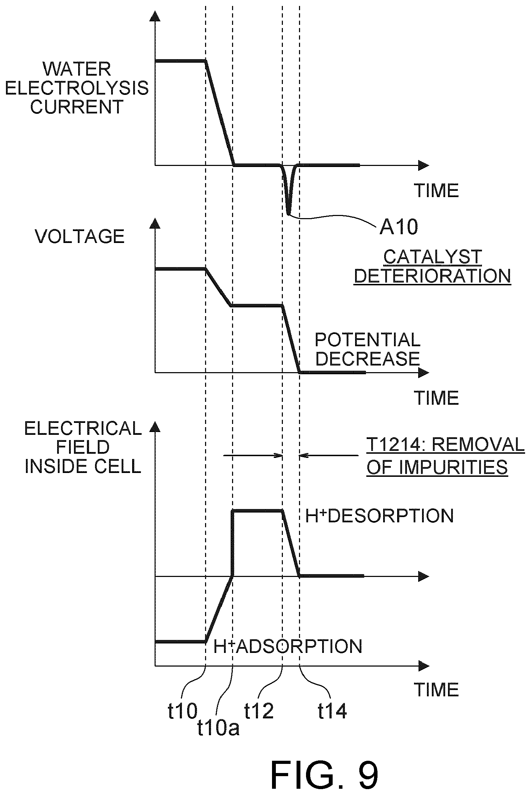

The storage 400 is formed by, for example, a hard disc drive (HDD) or a solid-state drive (SSD). As described above, the storage 400 stores control programs, pH values of various metals to be described later using FIG. 9, a table L10 (see FIG. 9) showing a relationship with a solvent elution potential, etc.

The acquirer 402 acquires information about control of the water electrolyzer 1. In this embodiment, for example, the acquirer 402 acquires at least information about a voltage of the voltmeter V10 (see FIGS. 3A and 3B) and information about an electrical conductivity of the electrical conductivity meter D10 (see FIG. 1).

As described above, the connection controller 404 controls the connected and disconnected states of the plurality of switches T10, T14, T16, T20. The current-voltage controller 406 controls the voltage of the direct-current power source 30a and controls a potential applied to the anode current collector 106 of the single cell 100 (see FIG. 2).

The resistance controller 408 controls the resistance value of the variable resistor 30b. The valve controller 410 controls opening and closing of the plurality of control valves V12, V14, V16, V18, V20, V22 as described above. The determinator 412 determines the water quality of the circulation water based on, for example, information about the electrical conductivity of the electrical conductivity meter D10 (see FIG. 1).

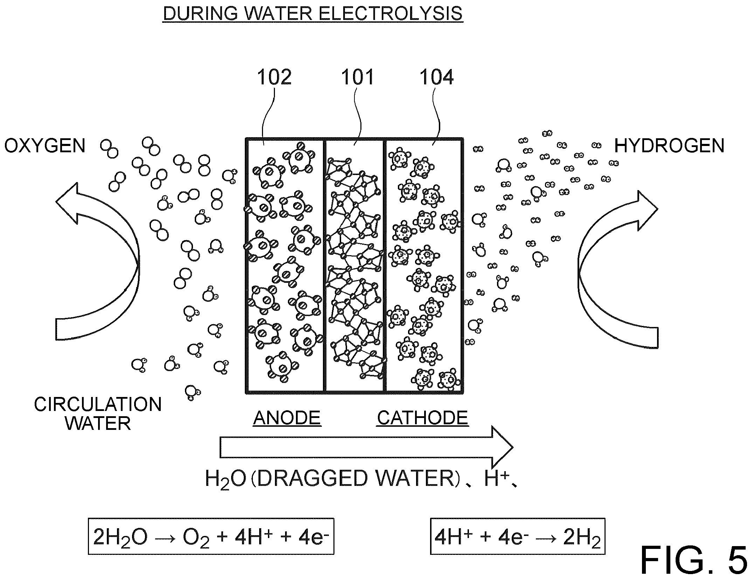

FIG. 5 is a view schematically showing reactions at the anode electrode 102 and the cathode electrode 104 during water electrolysis. During water electrolysis, the connection controller 404 puts the direct-current power source 30a in a connected state by the switches T10, T16, and puts the variable resistor 30b in a disconnected state by the switches T14, T20. Based on information about the voltage of the voltmeter V10 (see FIGS. 3A and 3B), the current-voltage controller 406 controls the direct-current power source 30a such that a voltage applied to the anode current collector 106 and the cathode current collector 108 of the single cell 100 (see FIG. 2) assumes a predetermined value, for example, 1.8 volts.

In this case, the valve controller 410 puts a valve of the control valve V10 on the side of the supply pipe P10 in an open state and puts a valve thereof on the side of the supply pipe P12 in a closed state. The valve controller 410 puts valves of the control valves V12, V20, V22 in an open state and puts valves of the control valves V14, V16, V18 in a closed state. These open and closed states of the control valves are one example, and the open and closed states are not limited to this example.

In this case, as described above, a reaction 2H₂O → 4H⁺ + 4e⁻ + O₂ occurs at the anode electrode 102, and oxygen O₂ and unreacted water H₂O are discharged from the discharge port G4.

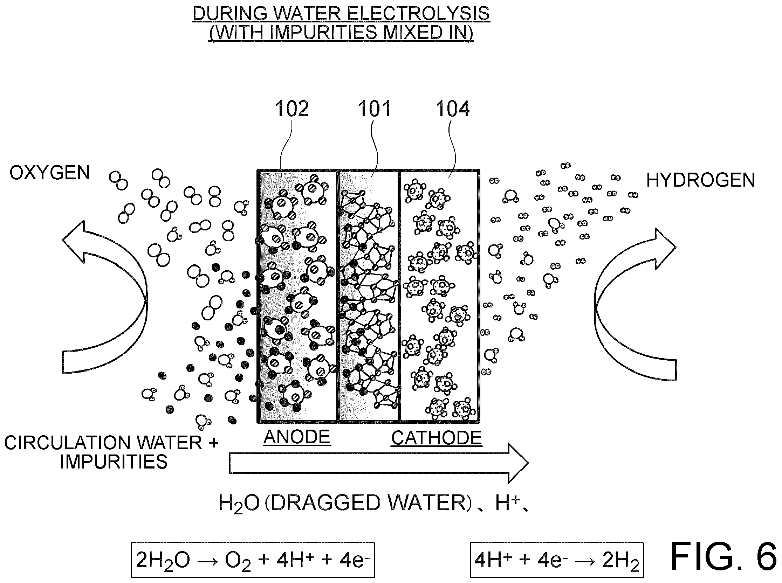

FIG. 6 is a view schematically showing reactions at the anode electrode 102 and the cathode electrode 104 during water electrolysis in a case where impurities have gotten mixed in the circulation water in the course of operation. When the same control as in FIG. 5 is performed, the impurities contained in the circulation water flow into the single cell 100 and build up on the anode electrode 102 and the electrolyte membrane 101. As the impurities build up, the water electrolysis cell 20 deteriorates, so that generating the same amount of hydrogen requires controlling the current and voltage applied to the anode current collector 106 and the cathode current collector 108 according to the cell deterioration.

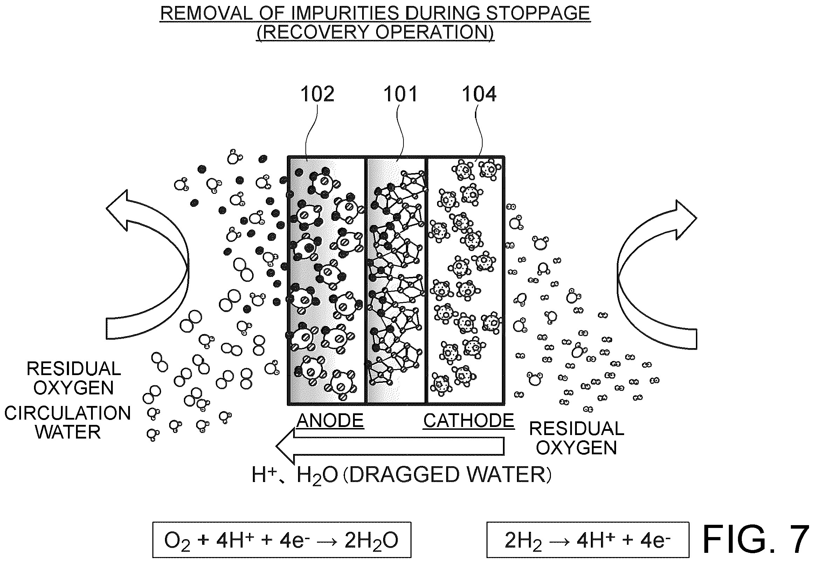

FIG. 7 is a view schematically showing reactions at the anode electrode 102 and the cathode electrode 104 during a recovery operation that is performed when impurities have gotten mixed in. The connection controller 404 stops the direct-current power source 30a, and puts the circuit in a disconnected state by the switches T10, T16 and puts the switches T14, T20 of the variable resistor 30b in a connected state.

In this case, the valve controller 410 puts the valve of the control valve V10 on the side of the supply pipe P12 in an open state. The valve controller 410 puts the valve of the control valve V10 on the side of the supply pipe P10 and the valve V12 in a closed state or a state of being further closed than during water electrolysis. Thus, pure water supplied from the pure water supply 27 is mainly supplied to the anode electrode 102 of each single cell 100 (see FIG. 2). Gases remaining inside each single cell 100 immediately after water electrolysis is stopped cause a so-called fuel cell reaction. At the anode electrode 102, a reaction O₂ + 4H⁺ + 4e⁻ → 2H₂O occurs. At the cathode electrode 104, on the other hand, a reaction 2H₂ → 4H⁺ + 4e⁻ occurs. In this process, impurities having adsorbed to the catalyst are desorbed by a water generation reaction in the opposite direction from water electrolysis and removed from the anode electrode 102 and the electrolyte membrane 101. These open and closed states of the control valves are one example, and the open and closed states are not limited to this example.

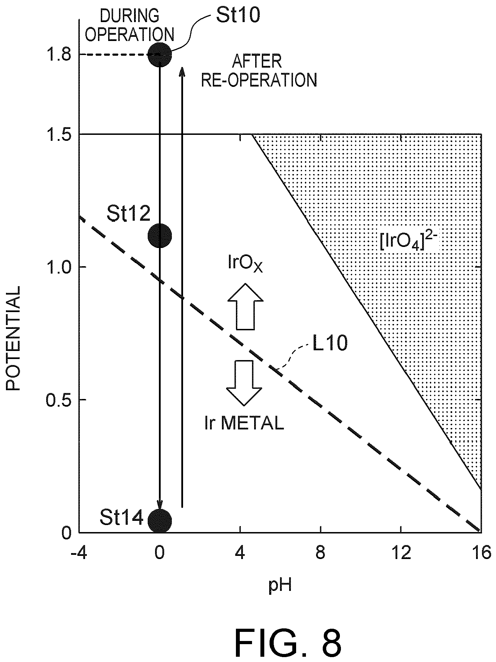

An example of control as a comparative example will be described using FIG. 8 and FIG. 9. FIG. 8 is a graph showing the thermodynamic stability of iridium oxide. The ordinate axis represents a hydrogen-based potential of the anode current collector 106, and the abscissa axis represents a pH value that is a hydrogen ion concentration at the anode electrode 102. The line L10 shows an example of a numerical value by a dashed line L10 of the graph representing a relationship between the pH value of iridium oxide and a solvent elution potential. FIG. 8 shows that the iridium oxide catalyst IrOₓ is stable in a state where the potential is high (above the dashed line L10 in the graph), and that the iridium oxide catalyst IrOₓ becomes unstable in a state where the potential is low (below the dashed line L10 in the graph), with the Ir metal tending to elute. This numerical value example L10 is stored in the storage 400 as tabulated data. Hydrogen-based zero volts in this embodiment means a potential in a state where separation and synthesis of hydrogen molecules and hydrogen ions are in equilibrium. Thus, when a potential relative to a hydrogen basis is mentioned in this embodiment, it means a potential relative to zero volts in the state where separation and synthesis of hydrogen molecules and hydrogen ions are in equilibrium.

FIG. 9 is graphs showing a state of the water electrolysis cell 20 in the comparative example. The abscissa axis represents time, and the ordinate axes respectively represent a water electrolysis current flowing inside the water electrolysis cell 20, a voltage (potential) of the anode electrode 102 of the water electrolysis cell 20, and an electrical field inside the single cell 100 of the water electrolysis cell 20.

As shown in FIG. 8, in a state St10 up to time t10 (see FIG. 9) in operation during water electrolysis, hydrogen is being generated, and the potential of the anode electrode 102 has a predetermined value, for example, 1.8 volts, as a result of current control. In this case, a hydrogen gas is generated as shown in FIG. 5 or FIG. 6.

As shown in FIG. 8 and FIG. 9, in the course of reducing the current applied by the direct-current power source 30a from that in an operating state to zero between t10 and t10a, hydrogen generation stops, and the potential of the anode electrode 102 continues to decrease up to time t12 and decreases to a state St12. When the circuit is let stand in a connected state after time t12, the water electrolysis current becomes negative due to a reverse reaction (fuel cell reaction) caused by residual gases, so that a discharge current in the opposite direction from the current direction during hydrogen generation occurs and the discharge current gradually becomes zero. At time t14, the current and the potential gradually become zero, and a state St14 is reached. During a period T1214 (between t12 and t14) when the discharge current in the opposite direction from the current direction during hydrogen generation is flowing, impurities are removed as shown in FIG. 7 as hydrogen ions move in the opposite direction from that during water electrolysis inside each cell 100, thereby promoting desorption of impurities having adsorbed to the catalyst of the anode electrode 102 along with accompanying water molecules (dragged water).

However, a peak A10 of the discharge current occurring during the period T1214 constitutes a sharp change, and the potential decrease speed with which the potential of the anode electrode 102 decreases due to the discharge current becomes higher. In this case, a state where the potential of the anode electrode 102 is within a solvent elution potential range (the range on the lower side of the dashed line of the solvent elution potential L10 in FIG. 8), for example, the state St14 is maintained, so that solvent elution of the iridium oxide in the anode electrode 102 occurs. This leads to further deterioration of the catalyst of the anode electrode 102.

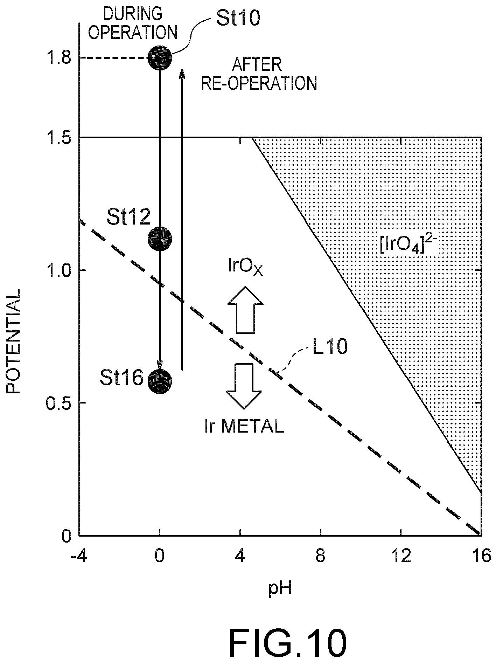

An example of control according to this embodiment will be described using FIGS. 10 to 14. The example of control according to this embodiment has two stop modes. In the first mode, the potential of the anode electrode 102 at a point when the discharge current has become close to zero is controlled to a first potential that is a predetermined value, for example, 0.5 volts. The first mode is a mode that is mainly used to remove impurities from the anode electrode 102 and the electrolyte membrane 101.

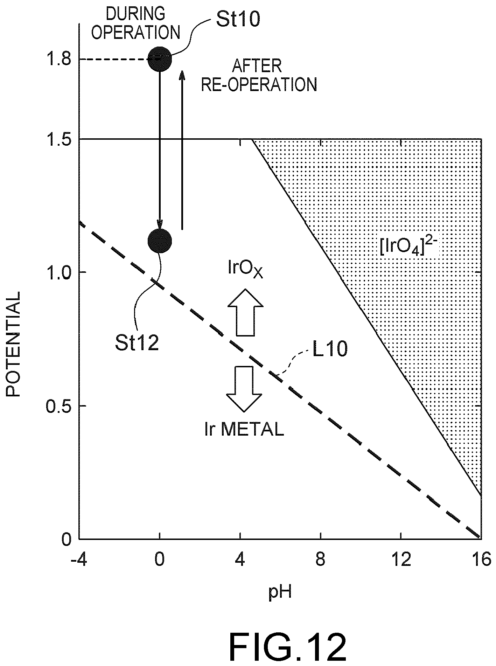

The second mode is a mode in which the potential of the anode electrode 102 is controlled to a second potential which is higher than the first potential and at which a discharge current in the opposite direction from a water electrolysis reaction does not occur. The second potential is, for example, 1.5 volts, and corresponds to, for example, a state St12 (see FIG. 12) in which the potential is equal to or higher than the solvent elution potential L10 of a predetermined catalyst, for example, iridium oxide in the anode electrode 102 and the iridium oxide is stable.

Like FIG. 8, FIG. 10 is a graph showing the thermodynamic stability of iridium oxide, and is a graph illustrating a state of the potential during stoppage in the first mode. The ordinate axis represents a hydrogen-based potential of the anode current collector 106, and the abscissa axis represents a pH value that is a hydrogen ion concentration at the anode electrode 102.

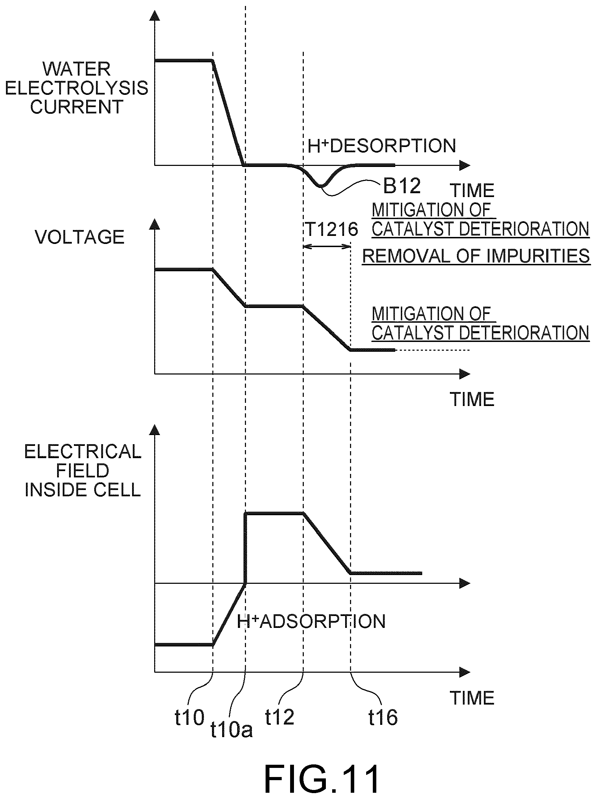

FIG. 11 is graphs showing a state of the water electrolysis cell 20 in the first mode. The abscissa axis represent time, and the ordinate axes respectively represent an electrolysis current flowing inside the water electrolysis cell 20, a voltage at the anode electrode 102 of the water electrolysis cell 20, and an electrical field inside the single cell 100 of the water electrolysis cell 20.

In the first mode, when hydrogen generation stops, the connection controller 404 puts the direct-current power source 30a in a disconnected state by the switches T10, T16 of the power source 30, and puts the variable resistor 30b in a connected state by the switches T14, T20. Then, based on information on the voltmeter V10, the resistance controller 408 controls the resistance value of the variable resistor 30b, and controls the potential decrease speed in T1216 (between times t12 and t16) (see FIG. 11) to be within a rage in which deterioration of the catalyst is mitigated. For example, the resistance controller 408 controls the potential decrease speed to a range of 20 mV/sec or lower per single cell 100, desirably 15 mV/sec or lower per single cell 100.

In the first mode, as shown in FIG. 10 and FIG. 11, when hydrogen generation is stopped between times t10 and t10a in the course of reducing the current applied by the direct-current power source 30a from that in the operating state to zero, the potential of the anode electrode 102 decreases to the state St12 up to time t12. After each switch is set in the first mode at time t12, the water electrolysis current becomes negative and a discharge current in the opposite direction from the current direction during hydrogen generation occurs. The discharge current is controlled during the period T1216, i.e., between times t12 and t16, so that the potential of the anode electrode 102 decreases and a state St16 is reached. In this case, the potential in the state St16 is kept at a predetermined potential higher than that in the state St14 of the comparative example (see FIG. 8), for example, at 0.5 volts. Impurities are removed as shown in FIG. 7 during the period T1216 when the discharge current in the opposite direction from the current direction during hydrogen generation is flowing.

A peak B12 of the discharge current occurring during the period T1216 constitutes a more gradual change than the peak A10 (see FIG. 9), and the potential decrease speed during the period T1216 is lower. In this case, rapid state changes of the potential of the iridium oxide catalyst IrOₓ in the anode electrode 102 as shown in FIG. 10 are mitigated. The potential of the anode electrode 102 in the state St16 is also kept at a higher value than that in the comparative example, for example, that in the state St14 of FIG. 8, and solvent elution of the iridium oxide is also mitigated compared with that in the comparative example. Accordingly, deterioration of the catalyst of the anode electrode 102 is further mitigated. Although changes in the potential of the anode electrode 102 in the state St16 are mitigated by the variable resistor 30b, when the variable resistor 30b continues to be connected, the discharge current continues to flow and the potential decreases gradually. Therefore, next, the switches T14, T20 of FIG. 3A are put in a disconnected state to stop the discharge current. Or, as shown in FIG. 3B, for example, the connection controller 404 may put the switches T14, T16 in a disconnected state and put the switches T10, T20 in a connected state so as to connect the variable resistor 30b and the direct-current power source 30a in series to each other inside the circuit of the power source 30. The current-voltage controller 406 may control each of the direct-current power source 30a and the variable resistor 30b such that the potential of the anode electrode 102 in the state St16 assumes a constant value. In this case, the current-voltage controller 406 may control the discharge current by the power source 30 after reducing the current applied by the direct-current power source 30a from that in the operating state to zero, and may control it so as to be able to maintain a state where the potential of the anode electrode 102 is equal to or higher than the solvent elution potential L10 and the iridium oxide is stable (see FIG. 10).

Like FIG. 8, FIG. 12 is a graph showing the thermodynamic stability of iridium oxide, and is a graph illustrating a state of the potential during stoppage in the second mode. The ordinate axis represents a hydrogen-based potential of the anode current collector 106, and the abscissa axis represents a pH value that is a hydrogen ion concentration at the anode electrode 102.

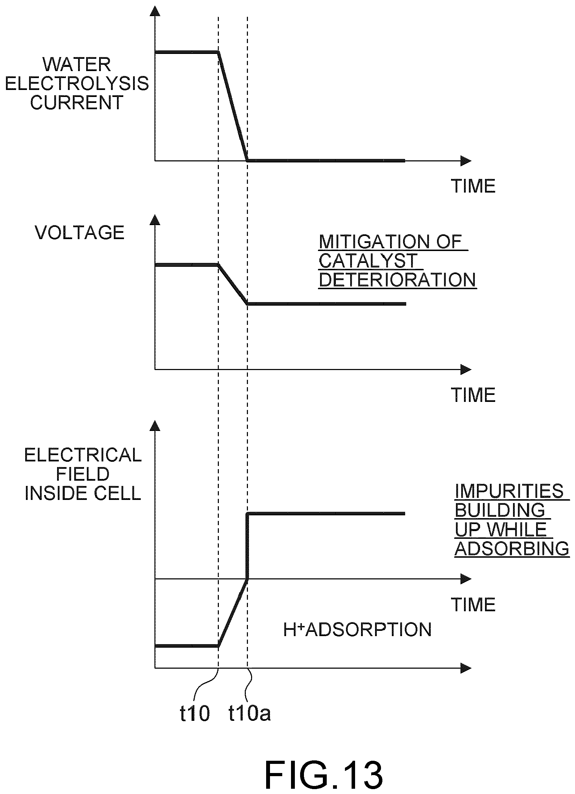

FIG. 13 is graphs showing a state of the water electrolysis cell 20 in the second mode. The abscissa axis represents time, and the ordinate axes respectively represent a water electrolysis current flowing inside the water electrolysis cell 20, a voltage (potential) of the anode electrode 102 of the water electrolysis cell 20, and an electrical field inside the single cell 100 of the water electrolysis cell 20.

In the second mode, between times t10 and t10a during stoppage of hydrogen generation, the connection controller 404 puts the direct-current power source 30a in a connected state by the switches T10, T16 and puts the variable resistor 30b in a disconnected state by the switches T14, T20. The current-voltage controller 406 controls the current value of the direct-current power source 30a to a predetermined value, for example, near zero, such that the potential of the anode electrode 102 in a state St12 meets the second potential. The second potential is a potential of the anode electrode 102 at which a discharge current does not occur. For example, the second potential is 1.5 volts and, as shown in FIG. 12, within a range equal to or higher than the solvent elution potential at which a predetermined catalyst, for example, iridium oxide in the anode electrode 102 can be present in a stable state. Controlling the potential of the anode electrode 102 to be equal to or higher than the solvent elution potential of the iridium oxide can mitigate solvent elution of the iridium oxide. Thus, when the amount of impurities having gotten mixed in the circulation water is small, stopping in the second mode can mitigate solvent elution of the iridium oxide more than the comparative example and the first mode. As another option, immediately after hydrogen generation is stopped, the switches T10, T16 that connect the direct-current power source 30a may be further put in a disconnected state to create a state where a discharge current does not occur.

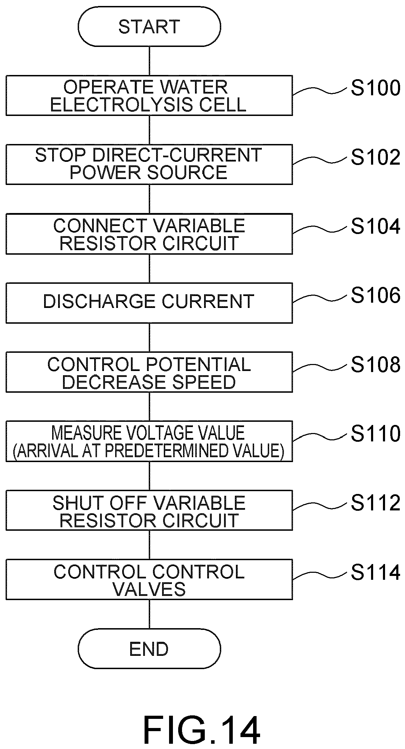

FIG. 14 is a flowchart showing an example of control that the controller 40 according to this embodiment exerts over the water electrolysis cell 20. Here, an example of stoppage control in the first mode will be described. As shown in FIG. 14, first, the controller 40 controls the circulation water supply pump 25 to supply water to the supply port G2 of each single cell 100. Subsequently, the connection controller 404 puts the switches T10, T16 in a conductive state and puts the switches T14, T20 in a non-conductive state. The current-voltage controller 406 controls the voltage of the direct-current power source 30a such that the potential between the anode current collector 106 and the cathode current collector 108 of the single cell 100 becomes, for example, 1.8 volts, and hydrogen generation is started (step S100).

Next, in the controller 40, the current-voltage controller 406 stops the supply of current (voltage) from the direct-current power source 30a (step S102), and subsequently, the connection controller 404 puts the switches T10, T16 in a non-conductive state and puts the switches T14, T20 in a conductive state (step S104). Thus, discharge in the first mode is started (step S106).

Next, based on information on the voltmeter V10, the resistance controller 408 controls the resistance value of the variable resistor 30b, and controls the potential decrease speed in T1216 (see FIG. 11) to a range in which deterioration of the catalyst is mitigated (step S108). When the potential of the anode electrode 102 reaches a predetermined value (step S110), the connection controller 404 puts the switches T14, T20 in a non-conductive state (step S112). The valve controller 410 controls the open and closed states of various valves to predetermined states (step S114), and the stoppage control in the first mode ends. In this way, the resistance value of the variable resistor 30b is controlled, and the potential decrease speed in T1216 (see FIG. 11) is controlled to a range in which deterioration of the catalyst is mitigated. Thus, the catalyst of the anode electrode 102 can be maintained at a potential at which solvent elution is mitigated, so that deterioration of the water electrolysis cell 20 can be mitigated.

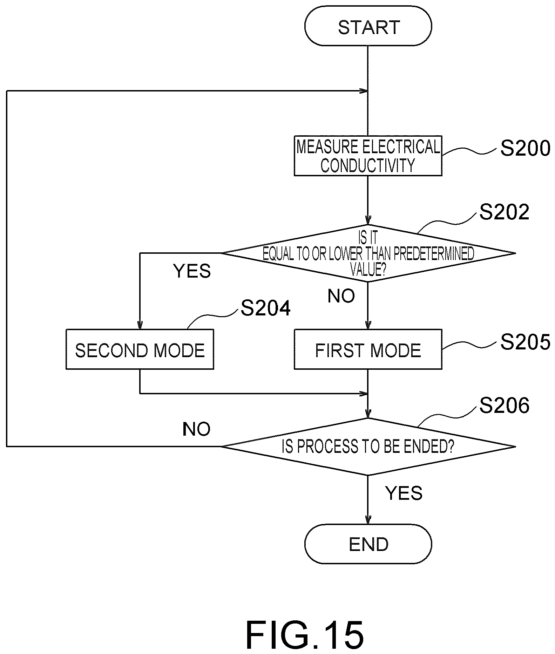

FIG. 15 is a flowchart showing an example of control that the controller 40 exerts over the water electrolysis cell 20 during stoppage of hydrogen generation. First, in step S100 during water electrolysis of FIG. 14, the acquirer 402 acquires the electrical conductivity of the circulation water measured by the electrical conductivity meter D10 (step S200). Subsequently, the determinator 412 determines whether the electrical conductivity of the circulation water is, for example, equal to or lower than 1 µS/cm (step S202). When the determinator 412 determines that the electrical conductivity of the circulation water is, for example, equal to or lower than 1 µS/cm (YES in step S202), the determinator 412 performs a second mode of stoppage process on the connection controller 404, the current-voltage controller 406, the resistance controller 408, and the valve controller 410 (step S204).

On the other hand, when the determinator 412 determines that the electrical conductivity of the circulation water as the water quality is higher than, for example, 1 µS/cm (deterioration due to impurities having gotten mixed in the circulation water) (NO in step S202), the determinator 412 performs a first mode of stoppage process on the connection controller 404, the current-voltage controller 406, the resistance controller 408, and the valve controller 410 (step S205). Then, the controller 40 determines whether to end the process (step S206). When the controller 40 determines not to end the process (NO in step S206), for example, when the controller 40 restarts the water electrolysis operation and then stops the operation, the controller 40 repeats the process from step S200. On the other hand, when the controller 40 temporarily creates the operating state, repeats the process from step S200 during stoppage again, and then determines to end the process (YES in step S206), the controller 40 ends the entire process.

In this way, when the water quality of the circulation water is determined by the electrical conductivity of the circulation water and the water quality is found to be kept within a predetermined criterial range, operation is stopped in the second mode. Thus, the potential of the anode electrode 102 can be controlled to be equal to or higher than the solvent elution potential at which the catalyst metal (iridium oxide) can exist in a stable state, i.e., within a potential range in which solvent elusion is less likely to occur, so that deterioration can be mitigated. On the other hand, when the water quality does not meet a predetermined criterion, for example, when the electrical conductivity of the circulation water is equal to or higher than a predetermined value, operation is stopped in the first mode. Thus, the process of removing impurities can be performed while the potential of the anode electrode 102 is controlled to a potential at which solvent elution of the catalyst metal is mitigated.

As has been described above, according to this embodiment, when hydrogen generation in the water electrolysis cell 20 is stopped, the controller 40 controls the potential of the anode electrode 102 to a predetermined potential, and controls the potential decrease speed at the anode electrode 102 during generation of a discharge current to a predetermined value by means of the variable resistor 30b. Thus, as potential fluctuations per unit time of the anode electrode 102 during generation of a discharge current are mitigated, the potential can be controlled to a potential at which elution of the catalyst metal is mitigated, and deterioration of the water electrolysis cell 20 is thereby mitigated.

### (Second Embodiment)

A water electrolyzer 1 according to a second embodiment differs from the water electrolyzer 1 according to the first embodiment in that it further has a plurality of determination modes in determining the water quality of the circulation water. In the following, differences from the water electrolyzer 1 according to the first embodiment will be described.

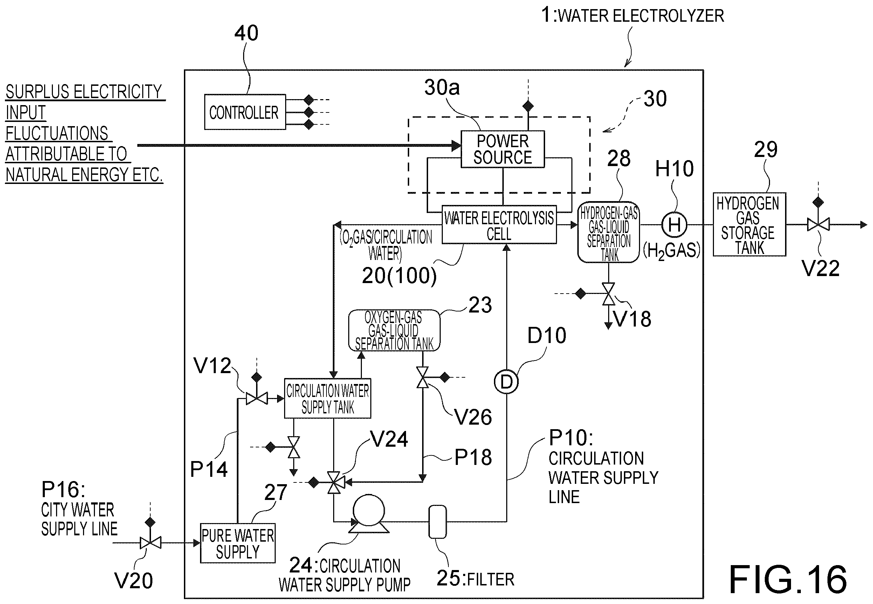

FIG. 16 is a block diagram showing the configuration of the water electrolyzer 1 according to the second embodiment. As shown in FIG. 16, the water electrolyzer 1 according to this embodiment has a water pipe P18 that allows the oxygen-gas gas-liquid separation tank 23 to be separated from the circulation water supply pipe P10.

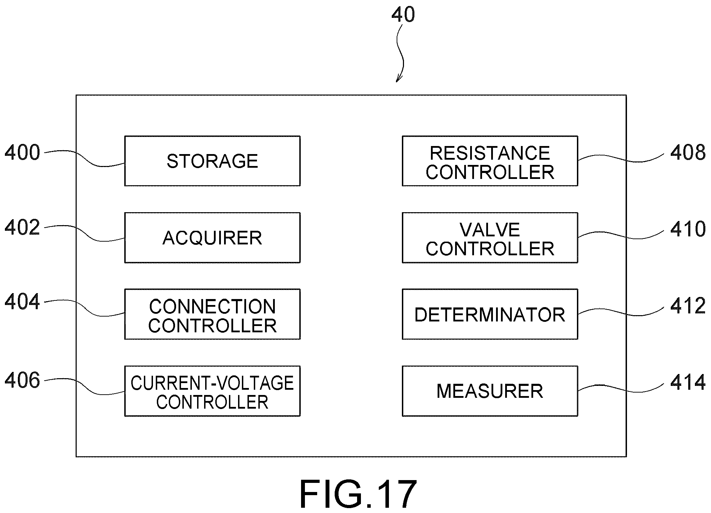

FIG. 17 is a block diagram showing the configuration of a controller 40 according to the second embodiment. As shown in FIG. 17, the controller 40 according to this embodiment further has a measurer 414. The measurer 414 measures an operating state of the water electrolyzer 1 relating to hydrogen generation, for example, at least one of an operation time, the potential of the water electrolysis cell, and numbers of times of starting and stopping.

When stopping hydrogen generation in the first mode, the controller 40 controls control valves V26, V24 to recover, from the oxygen-gas gas-liquid separation tank 23, water of high purity (water with a low electrical conductivity) that has been separated from water vapor in an oxygen gas and undergone gas-liquid separation and allow this water to be supplied from the control valve V26 to the control valve V24 via the pipe P18. Thus, impurities can be more efficiently removed from the water electrolysis cell 20 according to the system configuration.

A determinator 412 of the controller 40 has a 21 mode in which the first mode of control is performed when the voltage between the terminals of the water electrolysis cell 20 becomes equal to or higher than a predetermined value during hydrogen generation in water electrolysis operation. Further, the determinator 412 has a 22 mode in which the first mode of control is performed when a cumulated value of a hydrogen generation time of the water electrolysis cell 20 exceeds a predetermined value, and a 23 mode in which the first mode of control is performed when the number of times of starting or stopping of the water electrolysis cell 20 exceeds a predetermined value.

More specifically, in the 21 mode, the determinator 412 performs the first mode of control when, for example, the voltage between the terminals of the water electrolysis cell 20 measured by the measurer 414 under a condition of continuing to generate a predetermined amount of hydrogen during water electrolysis operation has increased by 10% from the voltage at an initial stage of operation. When deterioration of the water electrolysis cell 20 progresses, a cell overvoltage of a water electrolysis reaction increases and a reaction loss occurs, so that the amount of hydrogen generated per external electricity supply, such as renewable energy, decreases. On the other hand, when operation such as maintaining an electrolysis current to generate a predetermined amount of hydrogen is performed, the cell overvoltage due to deterioration increases and the voltage between the terminals becomes higher than that before deterioration. Therefore, by measuring the voltage between the terminals, the degree of deterioration of the water electrolysis cell 20 can be determined with higher accuracy.

In the 22 mode, the determinator 412 performs the first mode of control, for example, when the cumulated value of the hydrogen generation time exceeds 500 hours. Statistically, the water electrolysis cell 20 deteriorates when the cumulated value exceeds a predetermined time. Therefore, the degree of deterioration of the water electrolysis cell 20 can be determined with higher accuracy by the cumulated value of the hydrogen generation time.

In the 23 mode, the determinator 412 performs the first mode of control, for example, when the number of times of starting or stopping measured by the measurer 414 exceeds 30 times. Statistically, the water electrolysis cell 20 deteriorates when the number of times of starting or stopping exceeds a predetermined number of times. Therefore, the degree of deterioration of the water electrolysis cell 20 can be determined with higher accuracy by the number of times of starting or stopping.

As has been described above, the determinator 412 has a plurality of modes for determining the degree of deterioration of the water electrolysis cell 20, and therefore can determine the degree of deterioration of the water electrolysis cell 20 more objectively. Thus, it is possible to stop hydrogen generation in the first mode with higher accuracy, and to thereby perform a recovery process of the water electrolysis cell 20 while mitigating deterioration. In other words, it is possible to stop hydrogen generation also in the second mode with higher accuracy, and to thereby mitigate solvent elution in the anode electrode 102.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. A water electrolyzer (1) comprising:
a water electrolysis cell (20) configured to generate hydrogen and oxygen by electrolyzing water supplied to an anode electrode (102) using a solid polymer electrolyte membrane (101) having the anode electrode (102) installed on one side and a cathode electrode (104) installed on an other side;
a power source configured to supply a current and a voltage provided by a direct-current power source (30a) to between terminals of the water electrolysis cell (20); and
a controller (40) configured to perform a first mode of control that, after stopping hydrogen generation, establishes a connection state that causes a discharge current in an opposite direction from a current direction inside the water electrolysis cell (20) during hydrogen generation, and controls a potential of the anode electrode (102) to a first potential while keeping a potential decrease speed at the anode electrode (102) during generation of the discharge current at a predetermined value.

2. The water electrolyzer (1) according to claim 1, further comprising a variable resistor (30b) that is connectable between the terminals, wherein the controller (40) controls a resistance value of the variable resistor (30b) such that the potential decrease speed at the anode electrode (102) remains within a predetermined range.

3. The water electrolyzer (1) according to claim 2, wherein, in the first mode, the controller (40) connects the variable resistor (30b) between the terminals of the water electrolysis cell (20).

4. The water electrolyzer (1) according to either claim 2 or 3, wherein, in the first mode, the controller (40) controls a resistance value of the variable resistor (30b) such that a potential decrease speed between the terminals remains within a predetermined value range.

5. The water electrolyzer (1) according to any one of claims 1 to 4, wherein:
in the first mode during stoppage of hydrogen generation, the controller (40) controls the potential of the anode electrode (102) to the first potential; and
in a second mode during stoppage of hydrogen generation, the controller (40) controls the potential of the anode electrode (102) to a second potential which is higher than the first potential and at which the discharge current in the opposite direction does not occur.

6. The water electrolyzer (1) according to claim 5, wherein the second potential is within a range equal to or higher than a solvent elution potential of a catalyst of the anode electrode (102).

7. The water electrolyzer (1) according to any one of claims 1 to 6, wherein a metal component of a catalyst of the anode electrode (102) is iridium oxide.

8. The water electrolyzer (1) according to any one of claims 1 to 7, wherein the controller (40) performs the first mode of control when an electrical conductivity of water supplied to the anode electrode (102) becomes equal to or higher than a predetermined value.

9. The water electrolyzer (1) according to any one of claims 1 to 8, wherein the controller (40) performs the first mode of control when a voltage between the terminals of the water electrolysis cell (20) during hydrogen generation becomes equal to or higher than a predetermined value.

10. The water electrolyzer (1) according to any one of claims 1 to 9, wherein, in the first mode, the controller (40) performs control that supplies, as the water, pure water having an electrical conductivity equal to or lower than a predetermined electrical conductivity.

11. The water electrolyzer (1) according to any one of claims 1 to 10, wherein the controller (40) performs the first mode of control when a cumulated value of a hydrogen generation time of the water electrolysis cell (20) exceeds a predetermined value.

12. The water electrolyzer (1) according to any one of claims 1 to 11, wherein the controller (40) performs the first mode of control when a number of times of starting or stopping of the water electrolysis cell (20) exceeds a predetermined value.

13. The water electrolyzer (1) according to any one of claims 2 to 4, wherein:
the power source has a direct-current power source (30a) and a plurality of switches that is configured to electrically connect or disconnect; and
the controller (40) controls the plurality of switches so as to establish at least one of a first connection state in which the variable resistor (30b) is connected between the terminals, a second connection state in which the direct-current power source (30a) is connected between the terminals, and a third connection state in which the direct-current power source (30a) and the variable resistor (30b) are connected in series between the terminals, and, in the first mode, the controller (40) controls the connection state so as to establish the first connection state.

14. A control method of a water electrolysis cell (20) configured to generate hydrogen and oxygen by electrolyzing water supplied to an anode electrode (102) using a solid polymer electrolyte membrane (101) having the anode electrode (102) installed on one side and a cathode electrode (104) installed on an other side, the control method involving, after stopping hydrogen generation, establishing a connection state that causes a discharge current in an opposite direction from a current direction inside the water electrolysis cell (20) during hydrogen generation, and controlling a potential of the anode electrode (102) to a first potential while keeping a potential decrease speed at the anode electrode (102) during generation of the discharge current at a predetermined value.
